# EUROPÄISCHE PATENTANMELDUNG

(11) **EP 2 883 589 A1**
(43) Veröffentlichungstag der Anmeldung: **17.06.2015**
(21) Anmeldenummer: 13005733.4
(22) Anmeldetag: 10.12.2013
(51) Int. Cl.: B01D 39/16, B01D 39/20

(54) **Filter**

(71) Anmelder: Massold, Andreas, 72336 Balingen (DE); Sommer, Frank, 72336 Balingen (DE)
(72) Erfinder: Massold, Andreas, 72336 Balingen (DE); Sommer, Frank, 72336 Balingen (DE)
(74) Vertreter: Späth, Dieter

(57) **Zusammenfassung**

Die Erfindung schlägt ein Filter (1) aus einem offenporösen Feststoff vor, der aus aneinander gesetzten Tropfen (2) hergestellt ist, die durch Aushärten an Berührstellen stoffschlüssig verbunden sind, wobei zwischen den Tropfen (2) offene Poren (5) bestehen.

## Beschreibung

Die Erfindung betrifft ein Filter mit den Merkmalen des Oberbegriffs des Anspruchs 1.

Es sind Filter aus offenporösen und permeablen oder semipermeablen Feststoffen bekannt, die durch Sintern aus einem Kunststoffgranulat hergestellt sind. Offenporös bedeutet, dass das Filter offene, untereinander und mit einer Umgebung in Verbindung stehende Poren, d. h. Hohlräume aufweist. Sie sind dadurch permeabel, d. h. durchlässig für Flüssigkeiten und/oder Gase und undurchlässig für Feststoffe ab einer bestimmten Partikelgröße, oder semipermeabel, d. h. beispielsweise durchlässig für Gase und undurchlässig für Flüssigkeiten, durchlässig für eine und undurchlässig für eine andere Flüssigkeit und/oder durchlässig für ein Lösungsmittel und undurchlässig für einen im Lösungsmittel gelösten Stoff.

Aufgabe der Erfindung ist ein Filter aus einem offenporösen und permeablen oder semipermeablen Feststoff vorzuschlagen, das in anderer Weise hergestellt ist.

Diese Aufgabe wird erfindungsgemäß durch die Merkmale des Anspruchs 1 gelöst. Das erfindungsgemäße Filter weist einen offenporösen Feststoff auf, der aus Tropfen hergestellt ist, die ausgehärtet und an Berührstellen stoffschlüssig miteinander verbunden sind. Aushärten im Sinne der Erfindung ist auch als Abbinden, Festwerden, Erstarren oder Erhärten zu verstehen. Beim Aushärten fließen die Tropfen nicht, jedenfalls nicht vollständig zusammen bzw. ineinander, sondern es verbleiben Zwischenräume, die hier als Poren bezeichnet werden, zwischen den ausgehärteten Tropfen. Zur Herstellung des erfindungsgemäßen Filters sind die Tropfen flüssig, sie werden ein- oder mehrlagig aneinandergesetzt, so dass sie sich an Berührstellen berühren. Die Tropfen bestehen aus einem aushärtenden bzw. im fertigen Filter ausgehärteten Material. Beim Aushärten verbinden sich die aneinandergesetzten Tropfen an den Berührstellen stoffschlüssig zu dem offenporösen Feststoff, den der Filter aufweist. Bei der Herstellung des erfindungsgemäßen Filters können die Tropfen so dünnflüssig sein, dass sie an den Berührstellen ineinander fließen. Sie sind so zähflüssig, dass sie nicht vollständig zerlaufen und nicht zu einem porenfreien Vollkörper zusammen- bzw. ineinander fließen. Die Tropfen können zwar beim Aushärten ihre Form ändern, sie sind allerdings so zähflüssig, dass die als Poren bezeichneten Zwischenräume zwischen ihnen bestehen bleiben, und zwar offene, d. h. miteinander und mit einer Umgebung in Verbindung stehende Poren.

Durch die Offenporigkeit ist das Filter permeabel, d. h. durchlässig für Gase und/oder Flüssigkeiten und undurchlässig für Feststoffe ab einer bestimmten Partikelgröße und evtl. undurchlässig für Flüssigkeiten. Die Tropfen des Filters können auch so eingestellt sein, dass das Filter semipermeabel ist, also beispielsweise durchlässig für Gase und undurchlässig für Flüssigkeiten, durchlässig für eine und undurchlässig für eine andere Flüssigkeit und/oder durchlässig für ein Lösungsmittel und undurchlässig für einen im Lösungsmittel gelösten Stoff. Die Aufzählung ist beispielhaft und nicht abschließend. Das Filter muss nicht starr sondern kann elastisch sein. Eine Größe der Tropfen und ihre Fließfähigkeit bei der Herstellung des Filters ist (mit)bestimmend für Filtereigenschaften, ebenso kann das Material die Filtereigenschaften (mit)bestimmen. Eine bevorzugte Ausgestaltung der Erfindung sieht vor, dass die Tropfen Kunststoff aufweisen. Vorzugsweise weisen sie einen Thermoplast auf, der zur Herstellung des Filters durch Erwärmung verflüssigt und in Form von Tropfen einoder mehrlagig aneinander gesetzt wird. An Berührstellen fließen die Tropfen ineinander und verbinden sich beim Abkühlen stoffschlüssig miteinander. Durch eine Temperatur beim Verflüssigen lässt sich eine Zähflüssigkeit der Tropfen geeignet einstellen. Auch eine Herstellung des erfindungsgemäßen Filters aus einem Duroplast ist möglich.

Die Tropfen können verschiedene Größen und/oder Materialien aufweisen, wodurch sich vielfältige Gestaltungsmöglichkeiten ergeben und vielfältige Filtereigenschaften erreichen lassen.

Eine Ausgestaltung der Erfindung sieht vor, dass die Tropfen bei der Herstellung des Filters Feststoffpartikel enthalten, beispielsweise bestehen sie aus einem Kunststoff-Metall-Verbund, einem Kunststoff-Keramik-Verbund oder einem Kunststoff-Metall-Keramik-Verbund, der zur Herstellung des Filters flüssig ist und aushärtet. Beispielsweise können auch Glaspartikel und/oder Fasern aus verschiedenen Materialien in den Tropfen enthalten sein. Der Kunststoff kann als Matrix oder Binder im fertigen Filter verbleiben oder er kann entfernt, beispielsweise verdampft oder chemisch aufgelöst werden, so dass die Feststoffpartikel, beispielsweise die Metall- und/oder Keramikpartikel verbleiben und beispielsweise gesintert werden, um den offenporösen Feststoff des Filters zu bilden. Auch hier bietet die Möglichkeit, Tropfen verschiedener Materialien aneinander zu setzen vielfältige Möglichkeiten zur Gestaltung des Filters und zu einer Erzielung gewollter Filtereigenschaften. Auf diese Weise lassen sich verhältnismäßig einfach beispielsweise Dieselrußpartikelfilter und Katalysatoren für Brennkraftmaschinen herstellen. Die Feststoffpartikel können beim Entfernen des Kunststoffs in der Form der Tropfen verbleiben, so dass die Feststoffpartikel im fertigen Filter in Form der aneinandergesetzten Tropfen angeordnet sind, auch wenn sich beim Entfernen des Kunststoffs und beim Sintern ein Volumen verkleinert. Beispielsweise durch Sintern verbinden sich die Feststoffpartikel innerhalb der Tropfen und an den Berührstellen der Tropfen stoffschlüssig miteinander und es verbleiben offene Poren zwischen den Tropfen.

Eine bevorzugte Ausgestaltung der Erfindung sieht vor, dass das Filter einstückiger Bestandteil eines Bauteils ist, das in einem Arbeitsgang mit dem Filter hergestellt ist, wobei in einem Bereich, der das Filter bildet, der Feststoff offenporös und permeabel oder semipermeabel und außerhalb des Filters undurchlässig ist. Außerhalb des Filters kann das Bauteil zwar porös sein, aber nicht offenporös, d. h. Poren stehen nicht durchgehend miteinander und mit einer Umgebung in Verbindung. Vorzugsweise ist das Bauteil außerhalb des Filters als Vollmaterial ohne Poren ausgebildet. Möglich ist das Vollmaterial beispielsweise durch dünnflüssigere Tropfen in dem oder den Bereichen des Bauteils außerhalb des oder auch mehrerer Filter. Außerhalb des oder der Bereiche des Bauteils, die das oder die Filter bilden, fließen die dünnflüssigeren Tropfen zu dem Vollmaterial zusammen und ineinander. Die dünnflüssigeren Tropfen sind durch Erwärmung von Tropfen aus dem gleichen Material auf eine höhere Temperatur und/oder durch ein anderes Material möglich. Auch ist es möglich, ein das Bauteil bildendes Material außerhalb des oder der Bereiche des Bauteils, die das oder die Filter bilden, von vornherein nicht in Form von Tropfen sondern als flüssiges, beispielsweise auch zähfließendes oder pastöses Material auszubringen. Die Ausgestaltung der Erfindung mit dem Filter, das einstückiger Bestandteil eines Bauteils ist, das außerhalb des oder der Filter undurchlässig ist, ermöglicht in einfacher Weise die Herstellung eines Filters beispielsweise mit einer oder mehreren Laschen, Zapfen, einem Rahmen oder dgl. zur Handhabung und/oder zum Einbau des Filters oder beispielsweise auch eine Herstellung eines Gehäuses, eines Gehäuseteils, eines Behältnis usw. mit einem Filter in einem Arbeitsgang und aus einem Stück. Ein solches Gehäuse kann beispielsweise ein Scheinwerfergehäuse eines Kraftfahrzeugs oder eines Steuergeräts sein. Die Ausbildung eines oder mehrerer Filter ermöglicht eine Be- und Entlüftung, wobei das Filter verhindert, dass Partikel in das Gehäuse gelangen und beispielsweise eine Lampe oder einen Reflektor beschädigen oder sich optisch unschön auf einer Glasinnenseite absetzen. Weitere erfindungsgemäße Anwendungsmöglichkeiten des erfindungsgemäßen Filters bestehen in der Medizintechnik, als Gas-, Benzin- oder Ölfilter oder Wasserabscheider, als Be- oder Entlüftungselement für Fässer, Chemiefässer, elektrische Zahnbürsten, Batteriegehäuse, in Bewässerungsanlagen oder Entsalzungsanlagen. Eine weitere erfindungsgemäße Anwendungsmöglichkeit ist die Verwendung des Filters als Schalldämpfer mit vielfältigen Anwendungsbereichen beispielsweise in Druckluftanlagen oder Pneumatikventilen oder für Feuerwaffen. Bei der Verwendung als Schalldämpfer kann die Filterfunktion genutzt werden oder auch nicht, wobei in letztem Fall genaugenommen das Filter kein Filter sondern nur ein Schalldämpfer ist. Als Schalldämpfer für Feuerwaffen ist der erfindungsgemäße offenporöse Feststoff, der in dieser Verwendung nicht als Filter zu bezeichnen ist, vorzugsweise rohrförmig. Auf eine Permeabilität oder Semipermeabilität kommt es bei der Verwendung als Schalldämpfer für Feuerwaffen normalerweise nicht an. Wesentlich ist die Porosität: Verbrennungsgase eines pyrotechnischen Treibmittels der Feuerwaffe dringen in die Poren ein und absorbieren Schallenergie und verlangsamen einen Druckabbau der Verbrennungsgase, um einen Schall (Knall) erzeugenden Druckstoß beim Austritt der Verbrennungsgase aus einer Laufmündung der Feuerwaffe zu vermeiden oder zumindest zu verringern.

Eine bevorzugte Ausgestaltung der Erfindung sieht vor, dass das Filter hydrophob und/oder oleophob ist, was bei Verwendung des Filters im Bereich von Kraftfahrzeugen wichtige Eigenschaften sind oder jedenfalls sein können. Sofern die Partikel des Filters nicht ursprünglich hydrophob bzw. oleophob sind, können sie oder das Filter durch Zuschläge, Oberflächenbehandlung oder Oberflächenbeschichtung hydrophobiert bzw. oleophobiert werden. Eine Möglichkeit zum Oleo- und Hydrophobieren ist ein Beschichten mit Fluorkarbonverbindungen.

Die Erfindung wird nachfolgend anhand in der Zeichnung dargestellter Ausführungsformen näher erläutert. Die beiden Figuren zeigen Schnitte zweier erfindungsgemäßer Filter. Die Zeichnung ist als vereinfachte Darstellung zur Erläuterung und zum Verständnis der Erfindung zu verstehen.

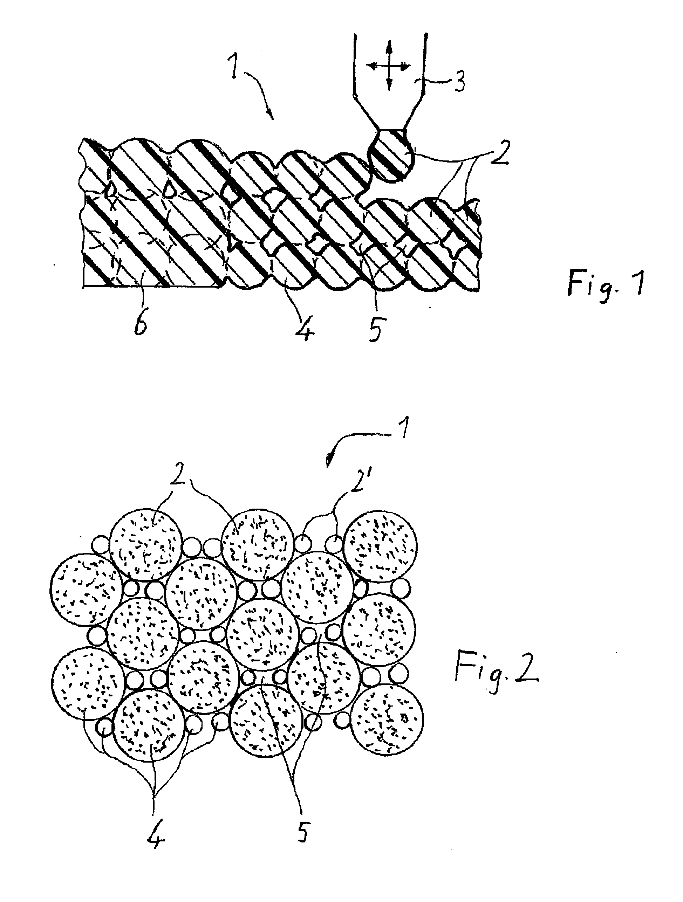

Das in Figur 1 gezeichnete erfindungsgemäße Filter 1 ist aus Tropfen 2 aus einem Thermoplast hergestellt, im Ausführungsbeispiel aus Polyethylen. Denkbar sind auch andere Kunststoffe, außer Thermoplasten beispielsweise auch Duroplaste, oder beispielsweise auch durch Erwärmen geschmolzene, d. h. fließfähige Metalle. Durch Erwärmen wird der Thermoplast verflüssigt oder jedenfalls so fließfähig, beispielsweise pastös, dass er in Form der Tropfen 2 mit einer Austragseinheit 3 ausbringbar ist. Die Tropfen 2 werden ein- oder mehrlagig aneinandergesetzt. An Berührstellen fließen die Tropfen 2 etwas ineinander. Bei einem Abkühlen verfestigen sich die Tropfen 2, was hier als Aushärten bezeichnet wird, und verbinden sich an den Berührstellen stoffschlüssig zu einem Feststoff 4. In Figur 1 sind die ursprünglichen Tropfen 2 mit Strichlinien dargestellt. Während des Aushärtens können die Tropfen 2 fließen und ihre Form ändern. Der Thermoplast ist so zähflüssig eingestellt, dass die Tropfen 2 beim Aushärten nicht vollständig zerfließen und zu einem Vollkörper Zusammen- und Ineinanderfließen, sondern die Tropfen 2 sind beim Ausbringen so zähflüssig, dass nach dem Aushärten hier als Poren 5 bezeichnete Zwischenräume zwischen den Tropfen 2 verbleiben, und zwar offene Poren 5, also Poren 5, die miteinander und mit einer Umgebung in Verbindung stehen.

Der aus den ausgehärteten und an den Berührstellen stoffschlüssig miteinander verbundenen Tropfen 2 bestehende Feststoff 4 ist offenporös und dadurch permeabel, d. h. durchlässig für Gase und je nach Ausgestaltung auch für Flüssigkeiten. Für Feststoffe ab einer bestimmten Partikelgröße ist der Feststoff undurchlässig und bildet somit das Filter 1, mit dem sich beispielsweise Feststoffpartikel aus einem Gas oder einer Flüssigkeit oder Flüssigkeitstropfen aus einem Gas filtern lassen. Auch eine semipermeable Ausführung des Filters 1 zum Trennen beispielsweise zweier Flüssigkeiten oder eines gelösten Stoffs aus einem Lösungsmittel ist möglich.

Eine absolute Größe der Poren 5 des Filters 1 ist u. a. einstellbar durch eine Größe der Tropfen 2, durch eine Fließfähigkeit der Tropfen 2 beim Ausbringen und eine Abkühlgeschwindigkeit: Verformen sich die Tropfen 2 beim Aushärten mehr, werden die Poren 5 kleiner. Ein Verhältnis eines gesamten Porenvolumens zu einem Volumen des Feststoffs 4 ist u. a. ebenfalls abhängig von der Fließfähigkeit der Tropfen 2 beim Ausbringen und der Abkühlgeschwindigkeit und von der Anordnung der Tropfen 2: Bei der dargestellten einfachen Anordnung der Tropfen 2 aufeinander ist eine Packungsdichte kleiner und damit das gesamte Porenvolumen im Verhältnis zum Volumen des Feststoffs 4 größer als bei einer kubisch-flächen- oder -raumzentrierten Anordnung der Tropfen 2. Weiterhin ist es möglich, verschieden große Tropfen 2 und/oder Tropfen 2 aus verschiedenen Materialien zu dem das Filter 1 bildenden offenporösen Feststoff 4 aneinander zu setzen. Diese Überlegungen zeigen, dass sich Filtereigenschaften des Filters 1 vielfältig einstellen lassen. Es lässt sich ein Filter 1 für Stäube und Feinstäube und selbst für lungengängige Teilchen herstellen. Umgekehrt ist auch ein grobes Filter 1 möglich. Auch eine Anzahl an Lagen der Partikel 2 ist mitbestimmend für die Filterwirkung. Von der Größe der Poren 5 und dem Verhältnis des gesamten Porenvolumens zum Volumen des Feststoffs 4 hängt eine Größe einer Porenoberfläche ab. Das ist von Bedeutung, wenn das Material, aus dem das Filter 1 besteht, mit einem in das Filter 1 eindringenden oder das Filter 1 durchströmenden Gas wechselwirkt, beispielsweise bei Verwendung des Filters 1 als Katalysator, worauf bei der Erläuterung der Figur 2 noch zurückgekommen werden wird.

Das Filter 1 ist hydrophob und bei Verwendung beispielsweise im Kraftfahrzeugbereich auch oleophob. Ein Hydro- und/oder Oleophobieren ist beispielsweise durch eine Beschichtung des Filters 1 mit Fluorkarbonverbindungen möglich.

Im Ausführungsbeispiel ist das Filter 1 von einem Rahmen 6 aus porenlosem Vollmaterial umschlossen. Der Rahmen 6 ist in einem Arbeitsgang mit dem Filter 1 und aus demselben Material, im Ausführungsbeispiel also ebenfalls aus Polyethylen, hergestellt. Allerdings ist auch ein anderes Material für den Rahmen 6 möglich, das mit einer anderen Ausbringeinheit oder mit derselben Ausbringeinheit 3 mit mehreren Materialspeichern ausgebracht wird (nicht dargestellt). Im Ausführungsbeispiel werden wie gesagt Tropfen 2 aus demselben Material für den Rahmen 6 aneinander und an die Tropfen 2 des Filters 1 ausgebracht, und zwar Lage für Lage sowohl die den Rahmen 6 als auch die das Filter 1 bildenden Tropfen 2. Allerdings sind die Tropfen 2 für den Rahmen 6 beim Ausbringen dünnflüssiger, so dass sie ineinander fließen und nach dem Aushärten den Rahmen 6 aus Vollmaterial ohne Poren bilden. Für den Rahmen 6 werden mehr Tropfen 2 pro Volumen und/oder größere Tropfen 2 aneinandergesetzt, weil zur Bildung des Vollmaterials des Rahmens 6 die Zwischenräume zwischen den Tropfen 2 von den verfließenden Tropfen 2 ausgefüllt werden müssen.

Anstatt des Rahmens 6 kann das das Filter 1 umschließende Vollmaterial beispielsweise auch eine Wand eines im übrigen nicht dargestellten Gehäuses sein, das ein oder mehrere Filter 1 an einer oder mehreren Stellen aufweist. Auf diese Weise ist beispielsweise die Herstellung eines Scheinwerfergehäuses für ein Kraftfahrzeug mit einem oder mehreren Filtern 1 zur Be- und Entlüftung oder zur Luftkühlung möglich. Das oder die Filter 1 verhindern ein Eindringen von Partikeln in das Scheinwerfergehäuse, die eine Lampe oder einen Reflektor beschädigen und sich optisch störend innen auf einem Scheinwerferglas niederschlagen würden. Ebenso wie ein Scheinwerfergehäuse sind mit der Erfindung andere Gehäuse, Behältnisse oder allgemein Bauteile mit einem oder mehreren Filtern 1 möglich, die einstückig und in einem Arbeitsgang mit dem Gehäuse, Behältnis oder Bauteil hergestellt sind. Beispiele für die Erfindung sind Steuergerätegehäuse, Benzinfilter oder Wasserabscheider, Behältnisse mit Filter für die Medizintechnik. Anstatt als Filter oder zusätzlich kann der offenporöse Feststoff 4 als Schalldämpfer beispielsweise in Druckluftanlagen und Pneumatikventilen oder für Feuerwaffen verwendet werden. Weitere erfindungsgemäße Verwendungen sind Belüftungselemente für Fässer und Chemikalienbehälter, Lüftungselemente für elektrische Zahnbürsten und Batteriegehäuse, Filter für Bewässerungsanlagen, Entsalzungsanlagen, Gasfilter, Ölfilter, Benzinfilter oder Wasserabscheider.

Wie in Figur 2 zu sehen können Tropfen 2 aus verschiedenen Materialien und/oder verschiedener Größen zu dem offenporösen Feststoff 4 aneinandergesetzt sein, der das Filter 1 bildet. In Figur 2 sind zwischen großen Tropfen 2 kleine Tropfen 2' angeordnet. Die kleinen Tropfen 2' können als Abstandshalter für die großen Tropfen 2 aufgefasst werden, die die Poren 4 zwischen den Tropfen 2, 2' vergrößern. Denkbar ist auch, dass den großen und den kleinen Tropfen 2, 2' verschiedene, beispielsweise von ihren Materialien abhängige Funktionen zukommen. Im Ausführungsbeispiel sind die großen Tropfen 2 Verbundwerkstoffe aus Kunststoff, beispielsweise Polypropylen, also einem Thermoplast, in den Feststoffpartikel, insbesondere Metall- und/oder Keramikpartikel eingelagert sind. Die kleinen Tropfen 2' bestehen beispielsweise aus Kunststoff ohne Einlagerungen. Zusammengesetzt werden die Tropfen 2, 2' wie oben zu Figur 1 beschrieben in flüssigem, ggf. zähfließendem, auch pastösem Zustand und verbinden sich beim Aushärten an den Berührstellen stoffschlüssig zu dem aus zwei Materialien und/oder aus ausgehärteten Tropfen 2, 2' verschiedener Größen.bestehenden offenporösen Feststoff 4, der das Filter 1 bildet. Nach dem Aushärten kann der Kunststoff entfernt, beispielsweise verdampft und die Feststoffpartikel können gesintert werden zu einem offenporösen Feststoff, in dem die Feststoffpartikel die Form und Anordnung der großen Tropfen 2 aufweisen. Durch das Sintern verbinden sich die Feststoffpartikel innerhalb der Tropfen 2 und an den Berührstellen der Tropfen 2 stoffschlüssig miteinander. Durch Verwendung von Metall- und/oder Keramikpartikeln lassen sich in geschilderter einfacher Weise Rußpartikelfilter oder Katalysatoren für Brennkraftmaschinen herstellen.

## Patentansprüche

1. Filter, das einen offenporösen und permeablen oder semipermeablen Feststoff (4) aufweist, **dadurch gekennzeichnet, dass** der Feststoff (4) aus ausgehärteten Tropfen (2) hergestellt ist, die aneinander gesetzt und an Berührstellen durch das Aushärten stoffschlüssig zu dem offenporösen Feststoff (4) miteinander verbunden sind, und dass zwischen den ausgehärteten Tropfen (2) offene, untereinander und mit einer Umgebung in Verbindung stehende Poren (5) bestehen.

2. Filter nach Anspruch 1, **dadurch gekennzeichnet, dass** die Tropfen (2) ein- oder mehrlagig angeordnet sind.

3. Filter nach Anspruch 1 oder 2, **dadurch gekennzeichnet, dass** die Tropfen (2) Kunststoff aufweisen.

4. Filter nach einem der Ansprüche 1 bis 3, **dadurch gekennzeichnet, dass** die Tropfen (2) verschiedene Größen aufweisen.

5. Filter nach einem der Ansprüche 1 bis 3, **dadurch gekennzeichnet, dass** die Tropfen (2) Feststoffpartikel aufweisen.

6. Filter nach einem der Ansprüche 1 bis 5, **dadurch gekennzeichnet, dass** die Tropfen (2) verschiedene Materialien aufweisen.

7. Filter nach Anspruch 5, **dadurch gekennzeichnet, dass** der Kunststoff entfernt und die Feststoffpartikel durch Erwärmung unterhalb einer Schmelztemperatur der Feststoffpartikel an Berührstellen stoffschlüssig zu dem offenporösen und permeablen oder semipermeablen Feststoff (4) miteinander verbunden sind.

8. Filter nach einem der vorhergehenden Ansprüche, **dadurch gekennzeichnet, dass** das Filter (1) einstückiger Bestandteil eines Bauteils (6) ist, das in einem Arbeitsgang mit dem Filter (1) hergestellt ist, wobei das Bauteil (6) außerhalb des Filters (1) undurchlässig ist.

9. Filter nach einem der vorhergehenden Ansprüche, **dadurch gekennzeichnet, dass** das Filter (1) hydrophob und/oder oleophob ist.

10. Filter nach einem der vorhergehenden Ansprüche, **dadurch gekennzeichnet, dass** das Filter (1) als Schalldämpfer verwendet wird.
